# EUROPEAN PATENT APPLICATION

(11) **EP 4 826 614 A1**
(43) Date of publication of application: **21.10.2026**
(21) Application number: 26172161.7
(22) Date of filing: 14.04.2026
(51) Int. Cl.: G06Q 10/0631, G06Q 10/10, G06Q 10/105, G06Q 10/0639

(54) **DETECTING REMOTE USERS USING INTERNET PROTOCOL SUBNET**

(30) Priority: 14.04.2025 US 202519177828
(71) Applicant: Microsoft Technology Licensing, LLC, Redmond, WA 98052 (US)
(72) Inventor: HU, Rui, Redmond, 98052 (US); WESTON, Jeffrey Michael, Redmond, 98052 (US); YILMAZ, Gorkem Ozer, Redmond, 98052 (US); CHEN, Yan, Redmond, 98052 (US); MA, Junchao, Redmond, 98052 (US); GE, Wangyao, Redmond, 98052 (US)
(74) Representative: CMS Cameron McKenna Nabarro Olswang LLP

(57) **Abstract**

A data processing system with a processor and memory is configured to: implement a feature pipeline to receive telemetry data generated in response to activity in a set of applications; analyze the telemetry data using a feature extraction unit of the feature pipeline to extract feature data from the telemetry data; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources using a resource allocation unit based on the classification.

## Description

### BACKGROUND

The internet has transformed society by providing vastly enhanced communication between computers around the globe, including file sharing, video conferencing and cloud computing. These tools have long had the potential to allow personnel to work remotely from different locations while still collaborating in an effective way. The COVID-19 pandemic accelerated rapidly this use of, and interest in, a distributed and remote work environment. A recent study has estimated that as many as 75% of enterprise meetings currently take place in hybrid mode. In the context of a meeting, the term hybrid refers to some attendees being together at a central meeting location while one or more other attendees join the meeting electronically using some form of video conferencing. Similarly, the term hybrid can be applied to the workplace generally in which some personnel primarily work together onsite at one or more central locations, while other personnel work remotely from a number of different locations, such as a home office.

Previously, remote users may have been viewed as less engaged and may have received a lower priority in some respects within an enterprise. Today, however, creating a productive hybrid workforce motivates an enterprise to place an equal focus on both onsite and remote personnel. Thus, it is important for an enterprise to be able to understand how their personnel operate in a hybrid workplace. Such information is essential for an enterprise to most effectively allocate resources to support and accommodate the productivity of their hybrid workforce. This information is also important to the development of product features and tools within the hybrid work environment to improve individual productivity.

Thus, a technical problem is presented of how to most effectively determine the composition and activity of a hybrid workforce for purposes such as resource allocation, support, and product development. As a workforce grows in size and complexity, it becomes impractical or unworkable to manually track the activity of the hybrid workplace. This problem is increased by the dynamic nature of the work in which personnel, who may be operating as onsite personnel for a period of time, such as a day or a week, then switch and operate as remote personnel for some period of time. In a hybrid environment, personnel may be constantly changing status as best suits their productivity or other considerations.

### SUMMARY

In one general aspect, the following description presents a data processing system with a processor and memory that is configured to: implement a feature pipeline to receive telemetry data generated in response to activity in a set of applications including one or more applications utilized by an enterprise with which a user is associated; analyze the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources associated with the enterprise using a resource allocation unit, the resource allocation unit allocated the computing and network resources based on the classification indicating that the user is working onsite or remotely at a location not associated with the enterprise.

In another general aspect, a data processing system with a processor and memory that is configured to: implement a feature pipeline to receive telemetry data generated in response to activity in a set of applications including one or more applications utilized by a plurality of users associated with an enterprise; analyze the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application; operate a scoring pipeline to classify each user of the plurality of users as working onsite or remotely based on the feature data extracted from the telemetry data using a machine-learning model trained to receive feature data as an input and to output a classification indicating that each user is working onsite at a location associated with the enterprise or remotely at a location not associated with the enterprise; and allocate computing and network resources associated with the enterprise using a resource allocation used, the resource allocation unit allocated the computing and network resources based on the classification indicating that the plurality of users is working onsite or remotely at a location not associated with the enterprise.
In another general aspect, a computer-readable storage medium stores instructions that, when implemented by a processor, or a group of processors, cause a system incorporating the processor or group of processors to: implement a feature pipeline to receive telemetry data generated in response to activity in a set of applications including one or more applications utilized by an enterprise with which a user is associated; analyze the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources associated with the enterprise using a resource allocation unit, the resource allocation unit allocated the computing and network resources based on the classification indicating that the user is working onsite or remotely at a location not associated with the enterprise.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIG. 1 is a block diagram of an illustrative system for providing an enterprise with an accurate analysis of personnel working onsite and remotely according to the principles described herein.
FIG. 2 is a more detailed block diagram of the illustrative system of FIG. 1 for providing an enterprise with an accurate analysis of personnel working onsite and remotely according to the principles described herein.
FIG. 3 is a table outlining the processes of the system illustrated in FIG. 2
FIG. 4 is a table defining an example output schema of the model described herein.
FIG. 5 is a flowchart for an example method of classifying users according to the principles described herein
FIG. 6A is a flowchart for an example method of processing subnet addresses according to the principles described herein.
FIG. 6B is a flowchart for an example method of classifying users according to the principles described herein.
FIG. 7 is a block diagram illustrating an example software architecture, various portions of which may be used in conjunction with various hardware architectures herein described.
FIG. 8 is a block diagram illustrating components of an example machine configured to read instructions from a machine-readable medium and perform any of the features described herein.

### DETAILED DESCRIPTION

As noted above, an enterprise with a hybrid work environment faces the technical problem of how to most effectively determine the composition and activity of the hybrid workforce for purposes such as resource allocation, support, and product development. Trying to track such information manually is extremely ineffective, at best, or completely unworkable, particularly as a workforce grows in size and as personnel are constantly changing status as best suits their productivity or other considerations.

A simplistic approach to solving this technical problem is to utilize each user's Internet Protocol (IP) address to determine location and categorize the use as onsite or remote. More specifically, an enterprise can use IP addresses to distinguish between onsite and remote personnel by tracking the IP addresses assigned to devices accessing the company's network. Devices connected to the company's internal network typically have IP addresses within a specific range assigned by the Information Technology (IT) department of the enterprise. By monitoring these IP addresses, the enterprise can identify which devices are connected to the internal network and, therefore, which personnel are onsite. Conversely, devices accessing the company's network from outside the office usually have IP addresses assigned by external internet service providers (ISPs). By comparing these external IP addresses to the known internal IP range, the enterprise can determine which personnel are working remotely.

However, using IP addresses to track user locations raises several privacy concerns. Users may feel that their privacy is being invaded if their location is constantly monitored. Additionally, IP addresses can be used to gather information about an individual's online activities. If this data is not properly secured, it could be accessed by unauthorized parties, leading to potential data breaches and identity theft. Legal and ethical issues must also be considered, as regulations may require an enterprise to obtain explicit consent from individuals before tracking their IP addresses and to inform them about how their data is collected, stored, and used. Moreover, IP addresses can reveal approximate locations and internet service providers, which could be misused for targeted advertising, blocking content, or even by cybercriminals to launch attacks.

Some users may seek to protect their privacy by using a Virtual Private Network (VPN) or may use a VPN for security or other reasons. The simple approach of determining personnel location based on IP address can be frustrated when personnel use a VPN. When a user uses a VPN to connect to the enterprise network, the IP address of their device is masked and replaced with the IP address of the VPN server to which they are connected. This means that the enterprise network will see the IP address of the VPN server rather than the true IP address of the connecting device.

For example, if a user is working remotely from home but connects to a VPN server located at the enterprise headquarters, the device will appear to have an internal IP address. This can make it difficult for the enterprise to distinguish between onsite and remote users accurately. Similarly, if an onsite user uses a VPN server located elsewhere, their device will appear to have an external IP address, potentially leading the enterprise to incorrectly categorize them as working remotely.

Consequently, a multi-faceted technical problem is presented for an enterprise to accurately determine what portion of a workforce is working onsite versus remotely while protecting user privacy and accounting for VPN use and users who dynamically switch between onsite and remote status. To resolve this technical problem, the present specification describes a machine-learning inference model that uses Internet Protocol (IP) subnet information that is collected while personnel are using the cloud-based productivity software of the enterprise. This machine-learning model is referred to as a Remote Worker Detection (RWD) model. Typically, an enterprise will maintain or provide an online suite of productivity applications and software for all personnel, including, for example, email, word processing, presentation software, file sharing, collaboration applications, messaging and conferencing applications, data analysis tools, etc. Such a suite is usually cloud-based for access from anywhere across the internet. Consequently, both remote and onsite personnel can access and utilize the same suite of productivity and other applications.

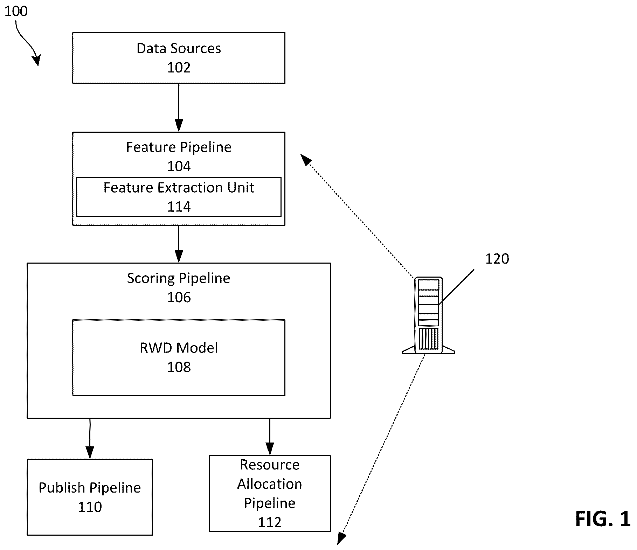

FIG. 1 is a block diagram of an illustrative system for providing an enterprise with an accurate analysis of personnel working onsite and remotely according to the principles described herein. As shown in FIG. 1, the system 100 includes a number of data sources 102. This is a collection of raw telemetry signals generated by users who are using a number of different applications in a productivity suite of applications provided and operated by a particular enterprise for which the users are personnel. There may be a separate data source storing telemetry for each of the applications in the productivity suite. This telemetry provides foundational input for a Remote Worker Detection (RWD) artificial intelligence (AI) model 108.

To utilize the telemetry from the data sources 102, the system 100 includes four pipelines, described herein. These pipelines 104, 106, 110 and 112 can be implemented by a server or collection of servers, represented in FIG. 1 by server 120.

The feature pipeline 104 is a structured, automated process that transforms raw data into meaningful, engineered features, ensuring they are optimized for the RWD 108. The feature pipeline 104 collects and processes telemetry data from the data sources. As described in more detail below, the feature pipeline 104 provides a feature extraction unit 114 to extract features from the telemetry data. The feature pipeline may take a daily download of telemetry from each of the applications in the productivity suite so as to determine, on a daily basis, which personnel were remote versus onsite.

The feature pipeline 104 provides the processed telemetry and other data to a scoring pipeline 106. This pipeline includes the RWD model 108. The scoring pipeline may be described as an inference mechanism that processes feature-engineered data to generate outcomes, i.e., determining whether a user actively worked onsite or remotely for each hour of a given day.

The output of the scoring pipeline 106 is provided to a publish pipeline 110. This publish pipeline is a systematic deployment process that integrates the model's output into the production environment. For example, the publish pipeline 110 makes insights regarding the number of remote users available for consumption by resource allocation systems and system administrative personnel or authorized users. This may be based on collating usage data indicative of whether the users are working onsite or remotely.

The output of the scoring pipeline 106 is also provided to a resource allocation pipeline 112. The resource allocation pipeline 112 automatically allocates computing resources for users in the system in response to the determination that users are working remotely or onsite. Specifically, the resource allocation pipeline 112 can also automatically allocate resources based on whether a population of users is working remotely or onsite to optimize the computing and network resources to support the how the population of users is accessing the cloud-based applications.

Specifically, the system 100 provides a technical solution to the technical problems described above that results in the following practical applications. Users are able to utilize the RWD inference model 108 to optimize online resource allocation and enhance IT infrastructure efficiency. Specifically, with the understanding of personnel work locations provided by the system 100, an enterprise is enabled to:
- Inform Workplace Strategies: Use insights on office utilization trends to make datadriven decisions regarding hybrid work policies and office space management.
- Prioritize Network Resources: Allocate internet bandwidth and optimize VPN performance for remote users while ensuring seamless connectivity for in-office employees.
- Enhance Security Policies: Implement location-based access controls to protect sensitive data based on whether users are onsite or remote.
- Optimize Hybrid Events: Improve the logistics of hybrid events, such as large meetings, to better accommodate both remote and onsite users.
- Optimize Cloud and On-Prem Services: Adjust cloud service load balancing, caching strategies, and server distribution to accommodate workforce distribution.
- Improve IT Support Allocation: Streamline IT support workflows by anticipating common technical issues based on work location.
Consequently, an enterprise can achieve a more efficient, secure, and user-friendly digital workplace experience.

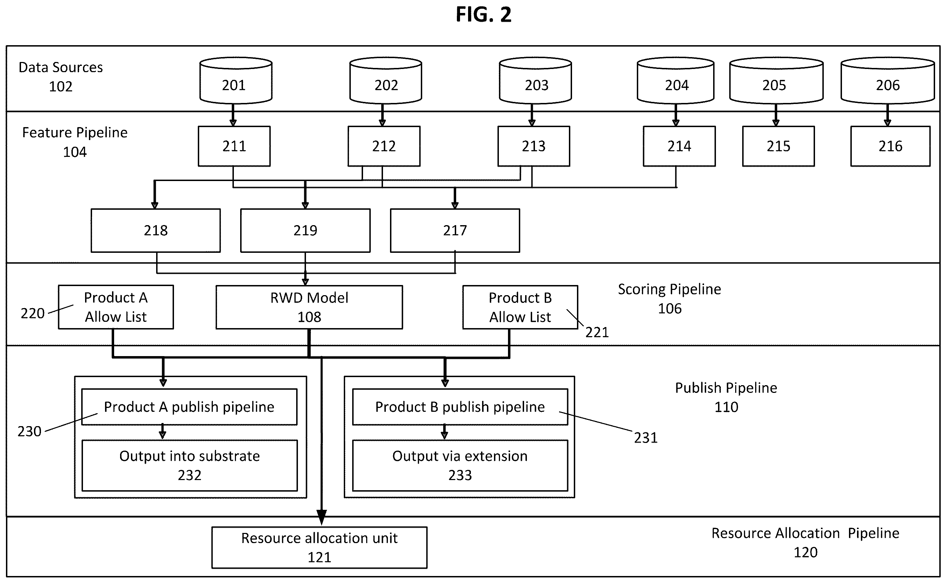

FIG. 2 is a more detailed block diagram of the illustrative system of FIG. 1 for providing an enterprise with an accurate analysis of personnel working onsite and remotely according to the principles described herein. As shown in FIG. 2 the data source 102 can include a number of databases 201-206. In general, these data sources are associated with a number of applications that are utilized by users associated with the enterprise. For example, this may be the various applications of a productivity suite of the enterprise. In different examples, all or only a subset of the applications from which the telemetry data is collected can be included in the productivity suite. At least some of the applications that provide the telemetry data may be provided by a third-party application provider that is separate from the enterprise. Some applications may be implemented by the enterprise and run on enterprise-specific hardware as well.

In the illustrated example, data source 201 contains the telemetry 211 from use of a collaboration application in the productivity suite of the enterprise. Data source 202 contains telemetry 212 from a video conferencing application in the suite. Data source 203 includes telemetry 213 from an email application in the suite. Data source 204 stores the telemetry 214 from an identify and access management system (e.g., a login and authentication system) for the suite.

Outside of the productivity suite, data source 205 stores data 215 on VPN usage. Specifically, data source 205 can provide an exhaustive list of first party and third part VPN ISPs in the network footprint data of the enterprise. A first party VPN is a VPN provided to users by the enterprise. A third-party VPN is a VPN obtained and utilized independently by a user to access the enterprise network.

Data source 206 stores IP classification data 216. An IP address can be mapped to a corresponding ISP. This indicates that no VPN was utilized by the user. Together, data sources 205 and 206 can provide a classification of all IP subnets in the network footprint data separating the users into categories of connecting via a Local ISP, first party VPN and third-party VPN.

The feature pipeline 104, at 217, merges the data, 211-214, to create a consolidated data set for the RWD model 108 to receive. Thus, the feature pipeline 104 provides a feature extraction unit 114 that analyzes the telemetry data from the various applications and extracts feature data from the telemetry data that is formatted so that the machine learning model can utilize the telemetry data as an input. The feature extraction unit can map values in the telemetry data into a latent space understood by the model. The features extracted can also be calculated based on telemetry collected over a period of time, such as hourly, daily, weekly, or monthly data values that can be used to determine long term usage patterns.

The feature pipeline 104 also, at 218, accounts for work occurring via a remote desktop and, at 219, and, at 219, adjusts data from other time zones to the current local time zone so that all processing by the model 108 is with respect to the local time zone. Thus, the feature extraction unit can also normalize the telemetry data into a standardized format or convert the telemetry data to a standard time zone so that the feature data is based on the same time zone.

The feature data extracted from the telemetry data can include information identifying the user (login credentials, employee ID, email address, etc.), an application identifier identifying the application which supplied the telemetry data, and network configuration information (network address, ISP, VPN provider, etc. that can be used to determine whether the user is working remotely or on premises).

As described, the RWD model 108 is trained to utilize a variety of data to determine whether a user was operating remotely or onsite. This determination may be made daily or for each hour of the day to address the dynamic nature of personnel location and work habits. The model 108 is trained to use all of the following to determine whether a user is remote or onsite: (1) IP subnet address, (2) ISP/VPN data and (3) telemetry data from the productivity suite.

In general, a user's physical location can be determined, at least approximately, based on the IP or subnet address assigned to the user's device. In a very basic example, if a significant number of users are all on a common subnet address at a time, that indicates that the users on this subnet are at a common location, most likely an office of the enterprise, i.e., onsite. On the other hand, if there is only a single user of the enterprise using a particular subnet address, as indicated by the productivity suite telemetry, that user should be classified as working remotely.

In more complex examples, there are online tools and databases that map IP addresses to locations. Services like GeoIP databases contain information about which IP address ranges are assigned to particular regions or ISPs (Internet Service Providers). Then, larger organizations or ISPs might be allocated specific subnets that cover certain geographical areas. Internet Service Providers often assign IP addresses based on regional network infrastructure. Knowing the ISP can help infer the user's location.

The RWD model 108 is a machine-learning model or AI engine, for example a neural network, logistic regression model, decision trees model, random forests model, or K-means clustering model. The training set for the RWD model can be a dataset that associates different values for the three types of input data, listed above, with a correct determination of each user classified as remote or onsite, given the corresponding input data. This training allows the RWD model 108 to then receive similar input data when the user's status is unknown and classify the user as remote or onsite. The user may also possibly be classified as onsite, but inactive.

Use of the telemetry from the productivity suite is particularly helpful in that it allows the system to distinguish between a user who is physically onsite to work and a user who is also physically onsite at an enterprise location, but is not working. Specifically, a user's IP or subnet address may indicate that the user is physically onsite, but this does not necessarily mean the user should be classified as working onsite at that time. For example, a user who is onsite simply to have a meal with coworkers, use exercise or other facilities provided by the enterprise, or for other non-work activities should not be classified as a working onsite at that time even though physically present onsite.

Consequently, the system pairs the determined location of the user with the telemetry from the productivity suite when prompting the RWD model to classify the status of the user. If the user is physically located at the enterprise worksite, but telemetry does not indicate the user is interacting with the productivity suite in an active manner, the user will or can be classified as not working onsite despite the user's location. Otherwise, if the user is physically located at an enterprise site and actively interacting with the enterprise productivity suite based on telemetry from the suite applications, the user will be classified as working onsite. Lastly, if the user's device is determined to be offsite from all enterprise locations, but the user is utilizing the productivity suite based on telemetry from the suite applications, the user is classified as working remotely. If telemetry from the suite applications indicates the user is not actively using the productivity suite, the user may be classified as inactive or not working regardless of physical location. The system can thus provide an indication of not just was the user onsite or remote, but how may hours was the user actively working when either onsite or remote based on productivity suite telemetry. For example, the user may be classified by the RWD model, within a day, as working onsite for a number of hours and working remotely for a number of hours in a hybrid scenario.

The scoring pipeline 106 may also seek to further protect and maintain privacy and security in using the output from the RWD model 108. In the illustrated system, the determinations of the model 108 as to users who are remote or onsite are provided to two systems identified as Product A and Product B. These systems may utilize the output of the model to automatically provision resources within the enterprise IT infrastructure, as noted above, or may provide reporting and insights to administrators for decision making and planning purposes, all based on an accurate assessment of user activity as onsite versus remote.

Consequently, the scoring pipeline 106 may maintain an allow list for Product A (220) and Product B (221). These are lists of tenants or administrators who have access to the output of the RWD model 108 via Product A or Product B. For example, Product A may be an insights or analytics tool for promoting productivity that is associated with the application suite. Within Product A, some features may be available to some subscribers, but perhaps not to others with a more limited subscription. The allow list for Product A (220) will govern distributing the relevant output of the model 108 to those users of Product A who have subscribed to the RWD service. Similarly, Product B may be a workspace planning/optimization tool, for example, a tool for optimizing physical or online workspace and resources. Again, the allow list for Product B (221) will govern which subscribers or administrators have access to the output of the RWD model 108 via the Product B tool.

In the publish pipeline 110, the output of the RWD model 108 is input to a Product A publish pipeline 230 subject to the Product A allow list 220. The output of the Product A publish pipeline 230 is provided to a substrate 232. Similarly, the output of the RWD model 108 is input to a Product B publish pipeline 231 subject to the Product B allow list 221. The output of the Product B publish pipeline 231 is provided via an extension 233.

As noted above in FIG. 1, the output of the scoring pipeline 106 is also provided to a resource allocation pipeline 120 that includes a resource allocation unit 121. The resource allocation unit 121 can include a number of resource controllers that can allocate or reallocate resources such as bandwidth, processing resources, access control scrutiny level, etc., based on whether a population of users is working remotely or onsite to optimize the computing and network resources to support the how the population of users is accessing the cloud-based applications.

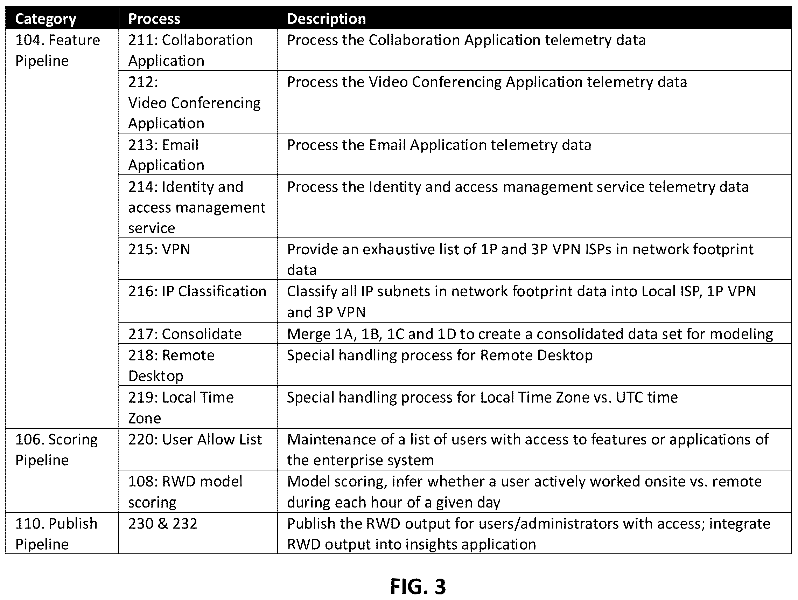

FIG. 3 is a table outlining the processes of the system illustrated in FIG. 2 and described above. Specifically, FIG. 3 lists the feature, scoring and publish pipelines in the first column. In the second column, the processes that are performed in each of these pipelines are listed along with a corresponding description of the process in the third column.

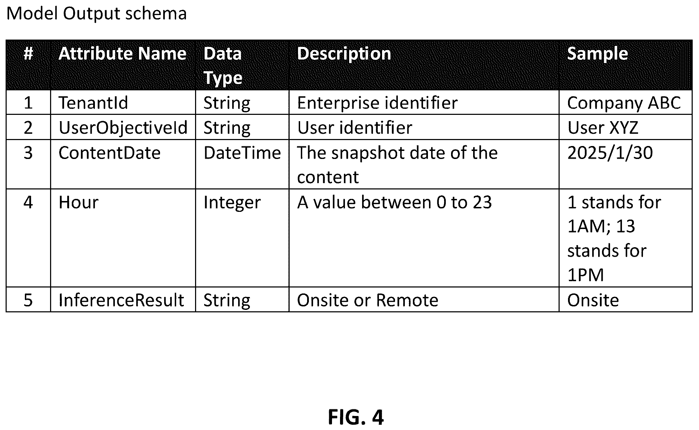

FIG. 4 is a table defining an example output schema of the RWD model 108 described herein. As will be appreciated, the model 108 can be trained or configured to provide output in any of a wide variety of schema. In the example output schema shown in FIG. 4, the output data is arranged in five categories or fields and provides an hourly determination of whether a user was working onsite or remote. The determination may also be for some other period of time rather than hourly.

As shown in FIG. 4, the first output (#1) is an enterprise identifier. The enterprise identifier may have an Attribute Name, such as TenantId, and is a string. For this output, the model 108 will name the enterprise involved, e.g., Company ABC.

The second output (#2) is a user identifier. The user identifier may have an Attribute Name, such as UserObjectiveId, and is a string. For this output, the model 108 will name the user involved, e.g., User XYZ or Employee XYZ.

The third output (#3) is a snapshot data of the content. The date of the content may have an Attribute Name, such as ContentDate, and is a numeric DateTime value. For this output, the model 108 will output the relevant date, such as in a Year/Month/Day format.

The fourth output (#4) is the hour for which the user's onsite/remote status is being determined. The hour may have an Attribute Name, such as Hour, and is an integer value. For this output, the model 108 will output the relevant hour, for example, as an integer from 1 to 24, where 1 indicates 1 am, and 13 indicates 1pm.

The fifth output (#5) is the determination of whether the user was working onsite or remote for the indicated hour. The determination may have an Attribute Name, such as InferenceResult, and may be a string. For this output, the model 108 will output the relevant determination such as Onsite, Remote or Not Working.

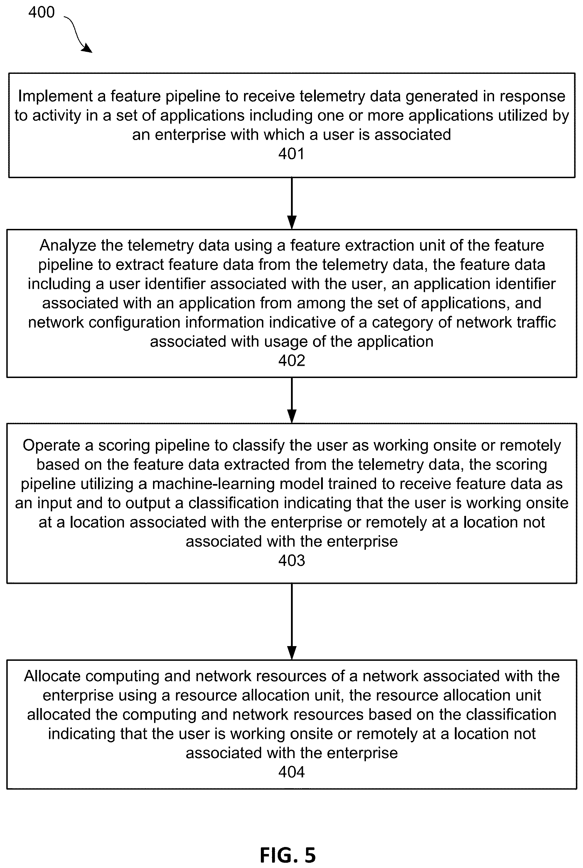

FIG. 5 is a flowchart for an example method of classifying users according to the principles described herein. As shown in FIG. 5, the method 400 includes the following steps. The method can be implemented with a processor and a memory that provides instructions for the processor, alone or with other processors, to, first, implement 401 a feature pipeline to receive telemetry data generated in response to activity in a set of applications including one or more applications utilized by an enterprise with which a user is associated.

Next, the method will analyze 402 the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application. The method will then operate 403 a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and

To conclude, the method will allocate 404 computing and network resources of a network associated with the enterprise using a resource allocation unit, the resource allocation unit allocated the computing and network resources based on the classification indicating that the user is working onsite or remotely at a location not associated with the enterprise. In this way, the method provides a technical solution to the technical problem of dynamically allocated computing and network resources based on the ever-changing landscape of users in the user population working onsite or remotely and switching between the two, possibly even within the same day.

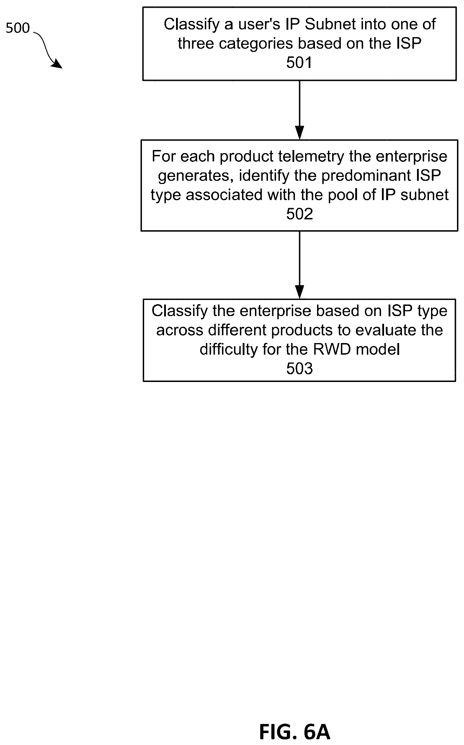

Within the context of FIG. 5, FIG. 6A is a flowchart for an example method of processing subnet addresses according to the principles described herein. As noted above, when the user utilizes a VPN, this complicates the determination of whether the user is working onsite or remotely. Without an approach to dealing with VPN usage, a system will struggle to accurately classify users who connect via VPN. Because VPNs obscure real IP addresses, most systems lack the capability to reliably distinguish between remote and office-based users when VPN usage is prevalent.

To address this issue, the system 100 described herein implements a three-layer classification model 500 to categorize user network configuration types using proprietary telemetry from the enterprise productivity suite.

Step 1: Classify a user's subnet into one of three categories (501). Using machine learning, the system will identify the Internet Service Provider (ISP) associated with a given IP address. The system will then determine if the ISP indicates a third-party VPN provider by performing a fuzzy match with a web-scraped list of third-party VPN providers. For instance, a subnet serviced by a known provider of third-party VPN software would clearly be classified as indicating use of a third-party VPN.

Local ISPs are identified through multiple criteria, such as the presence of key terms related to commonly used telecommunication companies or when an ISP services a large number of companies above a fine-tuned threshold. For example, an IP address serviced by "ISProvider" would be classified as a local ISP.

If an IP address appears in only one or a few companies, and each company has a significant proportion of IP addresses in the network footprint under this ISP, it will be labeled as a first-party VPN. For example, IP addresses under the company ABC, provided by "ABC Inc.", would be classified as a first-party VPN.

Step 2: For each product telemetry that the enterprise generates, identify the predominant ISP type associated with a pool of IP subnets (502) For example, for tenant "Company ABC," 90% of their users' access a collaboration application of the productive suite via first-party VPN. So "Company ABC" + Collaboration Application is labeled as a first-party VPN.

Step 3: Classify the enterprise based on ISP type across different products to evaluate the difficulty for the RWD model (503). For each enterprise, based on categories of all the products the enterprise uses, the system will label the enterprise as one of three types: local ISP, First-Party VPN (1PVPN), or Third-Party VPN (3PVPN). For example, Company ABC uses first-party VPN as the predominant ISP across most of their products, so the company is labeled as a first-party VPN user.

Thus, the RWD Model addresses VPN usage by categorizing customer network traffic into three distinct types:
Local ISP - Internet Service Provider connections directly from home or other nonenterprise locations;
First-Party VPN (1PVPN) - Enterprise-managed VPNs used for secure access; and
Third-Party VPN (3PVPN) - External VPN services that anonymize IP addresses.
This information is stored in data store 206 and provided as input to the RWD model 108 to assist in determining user location and status. With a local ISP and no VPN usage, user location can be determined, as described above, based on the IP or subnet address. The user can then be classified as onsite or remote.

To categorize the network traffic, in some cases, keywords from the telemetry of the user's session are compared to names of known VPN providers. Matching keywords from the name or other characteristics of VPN providers in the telemetry data can indicate what VPN was used. This then allows the system to characterize that use as being via a 1PVPN or 3PVPN based on the VPN provider because the enterprise will know which VPN providers are responsible for the 1PVPN(s) employed by the enterprise for their own IT infrastructure.

If the user is using a 1PVPN provided by the enterprise, there are a couple of solutions to allow the user's location and status to be accurately determined. First, the enterprise network administrators have control over how a 1PVPN connects to the network. Specifically, an admin can assign a range of subnet addresses for the 1PVPN to connect from onsite and a different range of subnet addressed for the 1PVPN to connect from remote or offsite locations. Accordingly, using these different ranges of assigned subnet addresses, the RWD model can be trained to identify the user as onsite or remote and using the 1PVPN based on the subnet address where the 1PVPN connects to the enterprise network.

Second, the enterprise can implement split tunnelling for the VPN they are providing. Split tunneling is a VPN feature that allows you to route some of a device's or an application's internet traffic through an encrypted VPN tunnel, while the rest of the traffic crosses the internet directly without encryption and lower latency. This provides the security and privacy benefits of a VPN for specific activities while maintaining regular internet access at lower processing overhead for others. With split tunneling, the user's actual subnet address is available via the non-encrypted tunnel. Thus, the user's location can be determined despite the use of a VPN. If an enterprise uses split tunneling for all 1PVPN traffic, that resolves the difficulties of characterizing a user's status on the 1PVPN.

Lastly, if the users uses a 3PVPN with split tunnelling, the same solution can be employed to correctly classify the user's onsite or remote status. However, heavy dependence on 3PVPN usage without split tunnelling still poses challenges, as these networks obscure real IP addresses for security purposes, making location inference and user classification unreliable.

Some of the features of the system described herein that provide advantages over prior approaches are as follows. In some methods of determining the location of a user software is installed on individual user devices that collects data such as available Wi-Fi networks, the connected Wi-Fi network, Media Access Control (MAC) addresses, and remote access status. Such an approach may cluster users based on shared network patterns. For example, large groups of users with similar Wi-Fi signals are classified as onsite or "Office," while individuals with distinct signals are labeled as "Remote."

In contrast, the RWD model described herein is a machine-learning inference system that leverages existing productivity suite telemetry signals instead of collecting new, potentially sensitive location data. As described above, the RWD model analyzes IP subnet data from users using the enterprise's productivity tools. Rather than relying on individual device data, the RWD model evaluates network signals and metadata, including:
The number of user from the same enterprise using a subnet;
The number of organizations sharing a given subnet; and
Overall user distribution across networks.

To enhance accuracy, the RWD model integrates multiple productivity suite signals, including, for example, from video conferencing software, collaboration applications, email applications, identification and access control software (e.g., a login or authentication system) and network footprint data. Moreover, rather than providing only a daily or binary classification of a user's status, the RWD model provides hourly classifications, determining whether a user actively "Worked in the Office, " "Worked Remotely" or was inactive with greater precision and contextual depth. This granularity allows for flexible aggregation at different levels (daily, weekly, or monthly). For instance, the RWD model can determine not just whether a user worked onsite but also how many hours they worked onsite within a given timeframe, enabling richer insights into work patterns.

Additionally, a less accurate system might detect whether a user is physically present in the office, but such systems do not differentiate between work-related and non-work-related presence. For example, if a user visits the office on a weekend for personal reasons, a less accurate system will still categorize them as "present at the office," even though no work activity took place.

In contrast, the RWD model is capable of distinguishing between mere presence and actual work mode. By analyzing metadata from productivity suite, the RWD model determines whether a user was actively engaged in work-related activities. If no such activity is detected during an office visit, the model will infer that the use was not working onsite, as that term is intended, thus offering a more precise assessment of hybrid work behavior.

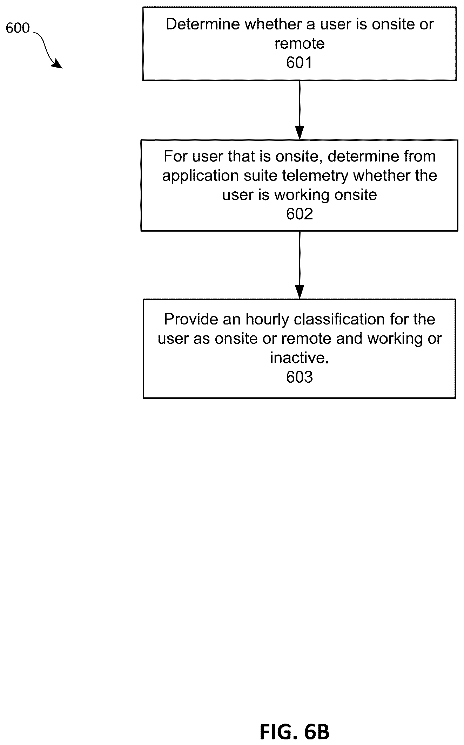

FIG. 6B is another flowchart for an example method of classifying users according to the principles described herein. As shown in FIG. 6B, the method 600 first determines whether a user is onsite or remote 601 with respect to the premises of an enterprise with which the user is associated, for example, an employee of an organization. This determination can be based on the approximate physical location of the user as determined based on the user's IP or subnet address.

Next, the method 600 will, for a user who has been determined to be onsite, use telemetry from the applications of the productivity suite of the enterprise to determine whether the user was actively working while physically onsite 602. To conclude, the method 600 will then provide a classification, for example, an hourly classification, of the user as working onsite or remotely. If the user was onsite, but not working, the user will not be classified as working onsite. The result may be a daily determination of how many hours during the day a user was working onsite and working remotely.

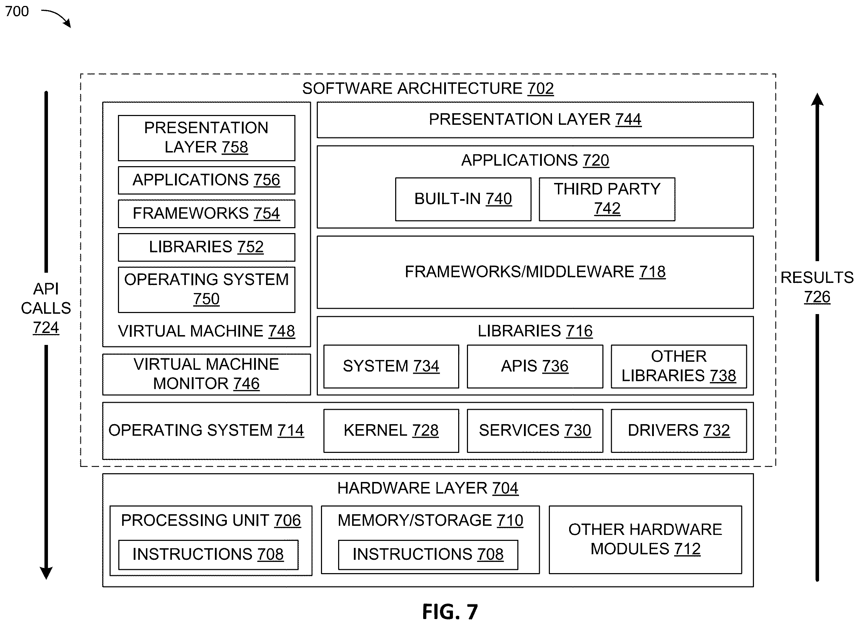

FIG. 7 is a block diagram 700 illustrating an example software architecture 702 for the system 100, described above. In this software architecture 702, various portions may be used in conjunction with various hardware architectures herein described, which may implement any of the above-described features.

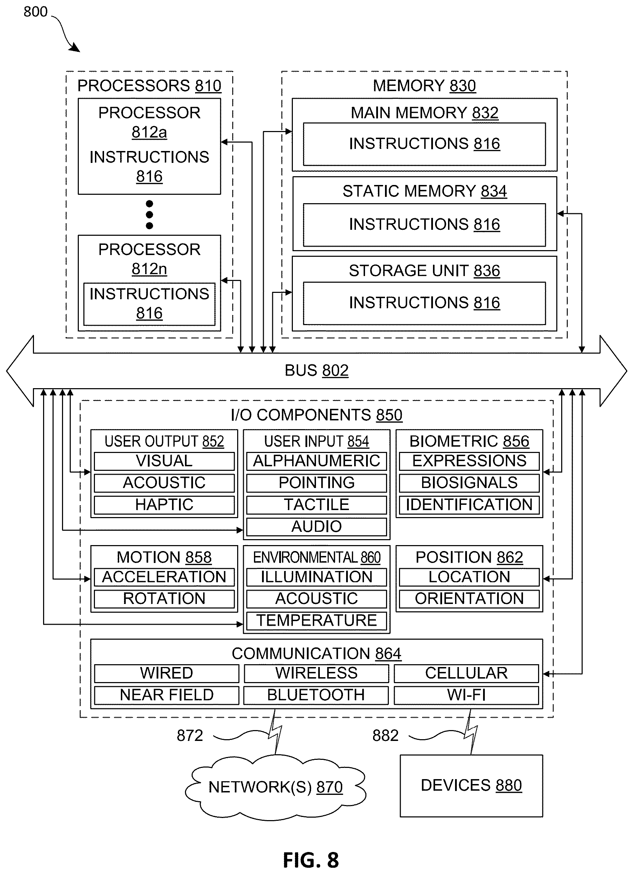

FIG. 7 is a non-limiting example of a software architecture, and it will be appreciated that many other architectures may be implemented to facilitate the functionality described herein. The software architecture 702 may execute on hardware such as a machine 800 of FIG. 8 that includes, among other things, processors 810, memory 830, and input/output (I/O) components 850. A representative hardware layer 704 is illustrated and can represent, for example, the machine 800 of FIG. 8. The representative hardware layer 704 includes a processing unit 706 and associated executable instructions 708. The executable instructions 708 represent executable instructions of the software architecture 702, including implementation of the methods, modules and so forth described herein. The hardware layer 704 also includes a memory/storage 710, which also includes the executable instructions 708 and accompanying data. The hardware layer 704 may also include other hardware modules 712. Instructions 708 held by processing unit 706 may be portions of instructions 708 held by the memory/storage 710.

The example software architecture 702 may be conceptualized as layers, each providing various functionality. For example, the software architecture 702 may include layers and components such as an operating system (OS) 714, libraries 716, frameworks 718, applications 720, and a presentation layer 744. Operationally, the applications 720 and/or other components within the layers may invoke API calls 724 to other layers and receive corresponding results 726. The layers illustrated are representative in nature and other software architectures may include additional or different layers. For example, some mobile or special purpose operating systems may not provide the frameworks/middleware 718.

The OS 714 may manage hardware resources and provide common services. The OS 714 may include, for example, a kernel 728, services 730, and drivers 732. The kernel 728 may act as an abstraction layer between the hardware layer 704 and other software layers. For example, the kernel 728 may be responsible for memory management, processor management (for example, scheduling), component management, networking, security settings, and so on. The services 730 may provide other common services for the other software layers. The drivers 732 may be responsible for controlling or interfacing with the underlying hardware layer 704. For instance, the drivers 732 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 716 may provide a common infrastructure that may be used by the applications 720 and/or other components and/or layers. The libraries 716 typically provide functionality for use by other software modules to perform tasks, rather than rather than interacting directly with the OS 714. The libraries 716 may include system libraries 734 (for example, C standard library) that may provide functions such as memory allocation, string manipulation, file operations. In addition, the libraries 716 may include API libraries 736 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 716 may also include a wide variety of other libraries 738 to provide many functions for applications 720 and other software modules.

The frameworks 718 (also sometimes referred to as middleware) provide a higher-level common infrastructure that may be used by the applications 720 and/or other software modules. For example, the frameworks 718 may provide various graphic user interface (GUI) functions, high-level resource management, or high-level location services. The frameworks 718 may provide a broad spectrum of other APIs for applications 720 and/or other software modules.

The applications 720 include built-in applications 740 and/or third-party applications 742. Examples of built-in applications 740 may include, but are not limited to, a contacts application, a browser application, a location application, a media application, a messaging application, and/or a game application. Third-party applications 742 may include any applications developed by an entity other than the vendor of the particular platform. The applications 720 may use functions available via OS 714, libraries 716, frameworks 718, and presentation layer 744 to create user interfaces to interact with users.

Some software architectures use virtual machines, as illustrated by a virtual machine 748. The virtual machine 748 provides an execution environment where applications/modules can execute as if they were executing on a hardware machine (such as the machine 800 of FIG. 8, for example). The virtual machine 748 may be hosted by a host OS (for example, OS 714) or hypervisor, and may have a virtual machine monitor 746 which manages operation of the virtual machine 748 and interoperation with the host operating system. A software architecture, which may be different from software architecture 702 outside of the virtual machine, executes within the virtual machine 748 such as an OS 750, libraries 752, frameworks 754, applications 756, and/or a presentation layer 758.

FIG. 8 is a block diagram illustrating components of an example machine 800 configured to read instructions from a machine-readable medium (for example, a machine-readable storage medium) and perform any of the features described herein. The example machine 800 is in the form of a computer system, within which instructions 816 (for example, in the form of software components) for causing the machine 800 to perform any of the features described herein may be executed.

As such, the instructions 816 may be used to implement modules or components described herein. The instructions 816 cause unprogrammed and/or unconfigured machine 800 to operate as a particular machine configured to carry out the described features. The machine 800 may be configured to operate as a standalone device or may be coupled (for example, networked) to other machines. In a networked deployment, the machine 800 may operate in the capacity of a server machine or a client machine in a server-client network environment, or as a node in a peer-to-peer or distributed network environment. Machine 800 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 800 is illustrated, the term "machine" includes a collection of machines that individually or jointly execute the instructions 816.

The machine 800 may include processors 810, memory 830, and I/O components 850, which may be communicatively coupled via, for example, a bus 802. The bus 802 may include multiple buses coupling various elements of machine 800 via various bus technologies and protocols. In an example, the processors 810 (including, for example, a central processing unit (CPU), a graphics processing unit (GPU), a digital signal processor (DSP), an ASIC, or a suitable combination thereof) may include one or more processors 812a to 812n that may execute the instructions 816 and process data. In some examples, one or more processors 810 may execute instructions provided or identified by one or more other processors 810. The term "processor" includes a multi-core processor including cores that may execute instructions contemporaneously. Although FIG. 8 shows multiple processors, the machine 800 may include a single processor with a single core, a single processor with multiple cores (for example, a multi-core processor), multiple processors each with a single core, multiple processors each with multiple cores, or any combination thereof. In some examples, the machine 800 may include multiple processors distributed among multiple machines.

The memory/storage 830 may include a main memory 832, a static memory 834, or other memory, and a storage unit 836, both accessible to the processors 810 such as via the bus 802. The storage unit 836 and memory 832, 834 store instructions 816 embodying any one or more of the functions described herein. The memory/storage 830 may also store temporary, intermediate, and/or long-term data for processors 810. The instructions 816 may also reside, completely or partially, within the memory 832, 834, within the storage unit 836, within at least one of the processors 810 (for example, within a command buffer or cache memory), within memory at least one of I/O components 850, or any suitable combination thereof, during execution thereof. Accordingly, the memory 832, 834, the storage unit 836, memory in processors 810, and memory in I/O components 850 are examples of machine-readable media.

As used herein, "machine-readable medium" refers to a device able to temporarily or permanently store instructions and data that cause machine 800 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 816) for execution by a machine 800 such that the instructions, when executed by one or more processors 810 of the machine 800, cause the machine 800 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 850 may include a wide variety of hardware components adapted to receive input, provide output, produce output, transmit information, exchange information, capture measurements, and so on. The specific I/O components 850 included in a particular machine will depend on the type and/or function of the machine. For example, mobile devices such as mobile phones may include a touch input device, whereas a headless server or IoT device may not include such a touch input device. The particular examples of I/O components illustrated in FIG. 8 are in no way limiting, and other types of components may be included in machine 800. The grouping of I/O components 850 are merely for simplifying this discussion, and the grouping is in no way limiting. In various examples, the I/O components 850 may include user output components 852 and user input components 854. User output components 852 may include, for example, display components for displaying information (for example, a liquid crystal display (LCD) or a projector), acoustic components (for example, speakers), haptic components (for example, a vibratory motor or force-feedback device), and/or other signal generators. User input components 854 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 850 may include biometric components 856, motion components 858, environmental components 860, and/or position components 862, among a wide array of other physical sensor components. The biometric components 856 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 858 may include, for example, acceleration sensors (for example, an accelerometer) and rotation sensors (for example, a gyroscope). The environmental components 860 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 862 may include, for example, location sensors (for example, a Global Position System (GPS) receiver), altitude sensors (for example, an air pressure sensor from which altitude may be derived), and/or orientation sensors (for example, magnetometers).

The I/O components 850 may include communication components 864, implementing a wide variety of technologies operable to couple the machine 800 to network(s) 870 and/or device(s) 880 via respective communicative couplings 872 and 882. The communication components 864 may include one or more network interface components or other suitable devices to interface with the network(s) 870. The communication components 864 may include, for example, components adapted to provide wired communication, wireless communication, cellular communication, Near Field Communication (NFC), Bluetooth communication, Wi-Fi, and/or communication via other modalities. The device(s) 880 may include other machines or various peripheral devices (for example, coupled via USB).

In some examples, the communication components 864 may detect identifiers or include components adapted to detect identifiers. For example, the communication components 864 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 864, such as, but not limited to, geo-location via Internet Protocol (IP) address, location via Wi-Fi, cellular, NFC, Bluetooth, or other wireless station identification and/or signal triangulation.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

Generally, functions described herein (for example, the features illustrated in FIGS.1-6) can be implemented using software, firmware, hardware (for example, fixed logic, finite state machines, and/or other circuits), or a combination of these implementations. In the case of a software implementation, program code performs specified tasks when executed on a processor (for example, a CPU or CPUs). The program code can be stored in one or more machine-readable memory devices. The features of the techniques described herein are systemindependent, meaning that the techniques may be implemented on a variety of computing systems having a variety of processors. For example, implementations may include an entity (for example, software) that causes hardware to perform operations, e.g., processors functional blocks, and so on. For example, a hardware device may include a machine-readable medium that may be configured to maintain instructions that cause the hardware device, including an operating system executed thereon and associated hardware, to perform operations. Thus, the instructions may function to configure an operating system and associated hardware to perform the operations and thereby configure or otherwise adapt a hardware device to perform functions described above. The instructions may be provided by the machine-readable medium through a variety of different configurations to hardware elements that execute the instructions.

Alternatively or in addition to the other examples described herein, examples include any combination of the following clauses:
Clause A. A data processing system comprising: a processor; and a memory comprising programming instructions for execution by the processor, alone or with other processors, to: implement a feature pipeline to receive telemetry data generated in response to activity in a set of applications including one or more applications utilized by an enterprise with which a user is associated; analyze the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources of a network associated with the enterprise using a resource allocation unit, the resource allocation unit allocated the computing and network resources based on the classification indicating that the user is working onsite or remotely at a location not associated with the enterprise.
Clause B. The data processing system of clause A, wherein the scoring pipeline provides a classification of the user for different portions of a same day.
Clause C. The data processing system of clause A or B, wherein the scoring pipeline provides an hourly classification of the user as working onsite or remotely.
Clause D. The data processing system of any of clauses A-C, wherein the telemetry data is used by the scoring pipeline to distinguish between a user who is working onsite and a user who is located on onsite but not working while onsite for a period of time.
Clause E. The data processing system of any of clauses A-D, wherein the feature pipeline is to communicate with data sources storing telemetry for any of a collaboration application, an email application and a video conferencing application of a productivity suite of the enterprise.
Clause F. The data processing system of any of clauses A-E, wherein the feature pipeline is to receive network footprint data and classify network traffic as being via an Internet Service Provider directly, via a first-party Virtual Private Network (VPN) operated by the enterprise or via a third-party VPN.
Clause G. The data processing system of clause F, wherein, in response to a determination that network traffic is via a first-party VPN, split tunnelling is implemented to facilitate classification of the user.
Clause H. The data processing system of clause F, wherein, in response to a determination that network traffic is via a first-party VPN, the scoring pipeline uses subnet ranges assigned by the enterprise to determine whether access via the first-party VPN is from onsite or offsite.
Clause I. The data processing system of any of clauses A-H, wherein the processor is to operate the network by implementing a publish pipeline in which an aggregate classification of users is input into at least one of an insights and analytics tool, and a workspace planning/optimization tool.
Clause J. The data processing system of clause I, wherein the scoring pipeline comprises allow lists that govern use of the aggregate classification in the publish pipeline based on subscriber identity.
Clause K. The data processing system of any of clause A-J, wherein the processor is to operate the network to implement location-based access controls based on whether the user is classified as working onsite or remotely.
Clause L. The data processing system of any of clauses A-K, wherein the processor is to adjust cloud service load balancing, caching strategies and server distribution to accommodate workforce distribution based on an aggregate classification of multiple users.
Clause M. The data processing system of any of clauses A-L, wherein the processor is to operate the network by allocating internet bandwidth and adjusting Virtual Private Network operation in the network based on an aggregate classification of multiple users.
Clause N. A data processing system comprising: a processor; and a memory comprising programming instructions for execution by the processor, alone or with other processors, to: implement a feature pipeline to receive telemetry data generated in response to activity in a set of applications including one or more applications utilized by a plurality of users associated with an enterprise; analyze the telemetry data using a feature extraction unit of the feature pipeline to extract feature data from the telemetry data, the feature data including a user identifier associated with a user of the plurality of users, an application identifier associated with an application from among the set of applications, and network configuration information indicative of a category of network traffic associated with usage of the application; operate a scoring pipeline to classify each user of the plurality of users as working onsite or remotely based on the feature data extracted from the telemetry data using a machine-learning model trained to receive feature data as an input and to output a classification indicating that each user is working onsite at a location associated with the enterprise or remotely at a location not associated with the enterprise; and allocate computing and network resources associated with the enterprise using a resource allocation unit, the resource allocation unit allocated the computing and network resources based on the classification indicating that the plurality of users is working onsite or remotely at a location not associated with the enterprise.
Clause O. The data processing system of clause N, wherein the data processing system includes a publishing pipeline configured to collate usage data indicative of the plurality of users working onsite or remotely and to publish the collated usage data to make the collated usage data available to authorized users via one or more data analytics platforms.
Clause P. The data processing system of clause N or O, further comprising instructions to determine a different classification of each user for different portions of a same day.
Clause Q. The data processing system of clause P, further comprising instructions to provide an hourly classification of a user as working onsite or remotely.
Clause R. The data processing system of any of clauses N-Q, wherein the telemetry is used to distinguish between a user who working on site and a user who is located on onsite but not working while onsite for a period of time.
Clause S. The data processing system of any of clauses N-R, further comprising using network footprint data to classify network traffic as being via an Internet Service Provider directly, via a first-party Virtual Private Network (VPN) operated by the enterprise or via a third-party VPN.
Clause T. A computer-readable storage medium comprising instructions that, when implemented by a processor, or a group of processors, cause a system incorporating the processor or group of processors to: implement a feature pipeline to receive telemetry data generated in response to activity in a set of applications including one or more applications utilized by an enterprise with which a user is associated; analyze the telemetry data using a feature extraction unit of the feature pipeline to extract feature data from the telemetry data, the feature data including a user identifier associated with the user, an application identifier associated with an application from among the set of applications, and network configuration information indicative of a category of network traffic associated with usage of the application; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources associated with the enterprise using a resource allocation unit, the resource allocation unit allocated the computing and network resources based on the classification indicating that the user is working onsite or remotely at a location not associated with the enterprise.
Clause U. A data processing system with a processor and memory is configured to: implement a feature pipeline to receive telemetry data generated in response to activity in a set of applications; analyze the telemetry data using a feature extraction unit of the feature pipeline to extract feature data from the telemetry data; operate a scoring pipeline to classify the user as working onsite or remotely based on the feature data extracted from the telemetry data, the scoring pipeline utilizing a machine-learning model trained to receive feature data as an input and to output a classification indicating that the user is working onsite at a location associated with the enterprise or remotely at a location not associated with the enterprise; and allocate computing and network resources using a resource allocation unit based on the classification.

In the foregoing detailed description, numerous specific details were set forth by way of examples in order to provide a thorough understanding of the relevant teachings. It will be apparent to persons of ordinary skill, upon reading the description, that various aspects can be practiced without such details. In other instances, well known methods, procedures, components, and/or circuitry have been described at a relatively high-level, without detail, in order to avoid unnecessarily obscuring aspects of the present teachings.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows, and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein.

Relational terms such as first and second and the like may be used solely to distinguish one entity or action from another without necessarily requiring or implying any actual such relationship or order between such entities or actions. The terms "comprises," "comprising," and any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "a" or "an" does not, without further constraints, preclude the existence of additional identical elements in the process, method, article, or apparatus that comprises the element.
The Abstract of the Disclosure is provided to allow the reader to quickly identify the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that any claim requires more features than the claim expressly recites. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A data processing system comprising:
a processor (810); and
a memory (830) comprising programming instructions for execution by the processor, alone or with other processors, to:
implement a feature pipeline (104) to receive telemetry data (211-216) generated in response to activity in a set of applications including one or more applications utilized by an enterprise with which a user is associated;
analyze the telemetry data (211-216) using a feature extraction unit (114) of the feature pipeline (104) to extract feature data from the telemetry data (211-216), the feature data including a user identifier associated with the user, an application identifier associated with an application from among the set of applications, and network configuration information indicative of a category of network traffic associated with usage of the application;
operate a scoring pipeline (106) to classify the user as working onsite or remotely based on the feature data extracted from the telemetry data (211-216), the scoring pipeline (106) utilizing a machine-learning model (108) trained to receive feature data as an input and to output a classification indicating that the user is working onsite at a location associated with the enterprise or remotely at a location not associated with the enterprise; and
allocate computing and network resources of a network associated with the enterprise using a resource allocation unit (121), the resource allocation unit (121) allocated the computing and network resources based on the classification indicating that the user is working onsite or remotely at a location not associated with the enterprise.

2. The data processing system of claim 1, wherein the scoring pipeline (106) provides a classification of the user for different portions of a same day.

3. The data processing system of claim 1 or 2, wherein the scoring pipeline (106) provides an hourly classification of the user as working onsite or remotely.

4. The data processing system of any of claims 1 to 3, wherein the telemetry data (211-216) is used by the scoring pipeline (106) to distinguish between a user who is working onsite and a user who is located on onsite but not working while onsite for a period of time.

5. The data processing system of any of claims 1 to 4, wherein the feature pipeline (104) is to communicate with data sources storing telemetry for any of a collaboration application, an email application and a video conferencing application of a productivity suite of the enterprise.

6. The data processing system of any of claims 1 to 5, wherein the feature pipeline (104) is to receive network footprint data and classify network traffic as being via an Internet Service Provider directly, via a first-party Virtual Private Network, VPN, operated by the enterprise or via a third-party VPN.

7. The data processing system of claim 6, wherein, in response to a determination that network traffic is via a first-party VPN, split tunnelling is implemented to facilitate classification of the user.

8. The data processing system of claim 6, wherein, in response to a determination that network traffic is via a first-party VPN, the scoring pipeline (106) uses subnet ranges assigned by the enterprise to determine whether access via the first-party VPN is from onsite or offsite.

9. The data processing system of any of claims 1 to 8, wherein the processor (810) is to operate the network by implementing a publish pipeline in which an aggregate classification of users is input into at least one of an insights and analytics tool, and a workspace planning/optimization tool.

10. The data processing system of claim 9, wherein the scoring pipeline (106) comprises allow lists that govern use of the aggregate classification in the publish pipeline based on subscriber identity.

11. The data processing system of any of claims 1 to 10, wherein the processor (810) is to operate the network to implement location-based access controls based on whether the user is classified as working onsite or remotely.

12. The data processing system of any of claims 1 to 11, wherein the processor (810) is to adjust cloud service load balancing, caching strategies and server distribution to accommodate workforce distribution based on an aggregate classification of multiple users.

13. The data processing system of any of claims 1 to 12, wherein the processor (810) is to operate the network by allocating internet bandwidth and adjusting Virtual Private Network operation in the network based on an aggregate classification of multiple users.

14. A data processing system comprising:
a processor (810); and
a memory (830) comprising programming instructions for execution by the processor, alone or with other processors, to:
implement a feature pipeline (104) to receive telemetry data (211-216) generated in response to activity in a set of applications including one or more applications utilized by a plurality of users associated with an enterprise;
analyze the telemetry data (211-216) using a feature extraction unit (114) of the feature pipeline (104) to extract feature data from the telemetry data (211-216), the feature data including a user identifier associated with a user of the plurality of users, an application identifier associated with an application from among the set of applications, and network configuration information indicative of a category of network traffic associated with usage of the application;
operate a scoring pipeline (106) to classify each user of the plurality of users as working onsite or remotely based on the feature data extracted from the telemetry data (211-216) using a machine-learning model (108) trained to receive feature data as an input and to output a classification indicating that each user is working onsite at a location associated with the enterprise or remotely at a location not associated with the enterprise; and
allocate computing and network resources associated with the enterprise using a resource allocation unit (121), the resource allocation unit (121) allocated the computing and network resources based on the classification indicating that the plurality of users is working onsite or remotely at a location not associated with the enterprise.

15. The data processing system of claim 14, wherein the data processing system includes a publishing pipeline configured to collate usage data indicative of the plurality of users working onsite or remotely and to publish the collated usage data to make the collated usage data available to authorized users via one or more data analytics platforms.
